# EUROPEAN PATENT APPLICATION

(11) **EP 0 778 159 A1**
(43) Date of publication of application: **11.06.1997**
(21) Application number: 96909177.6
(22) Date of filing: 10.04.1996
(51) Int. Cl.: B42D 15/10, B32B 31/30

(54) **SECURITY COVERING STRUCTURE FOR IDENTITY DOCUMENTS, AND PROCESS FOR OBTAINING IT**

(30) Priority: 26.04.1995 ES 9500811
(71) Applicant: I.D. TEC, S.L., 28761 Tres Cantos (ES)
(72) Inventor: COBIAN GARCIA, Francisco, E-28046 Madrid (ES)
(74) Representative: Ungria Lopez, Javier
(86) International application number: ES9600081
(87) International publication number: WO9633873

(57) **Abstract**

The invention relates to a security covering structure for identity documents, for example identity cards, passports, credit cards visas or checks, which comprises a series of layers (1, 2, 3). On determined areas (11, 21, 31) of said layers, corresponding reflecting means (12, 22, 32) haven been deposited. The areas (11, 21, 31) are arranged in such a way that they don't overlap when seen in a direction perpendicular to the external surface of the structure. The first layer (1) includes a polyester sheet, and the second layer (2) is made of polyolefin. The invention also relates to a process for obtaining said structure.

## Description

### OBJECT OF THE INVENTION

The present invention refers to a security covering structure for identity documents, for example identity cards, passports, visas or checks. The structure facilitates validation "on sight", at the same time that it impedes falsification of security documents by a photocopying machine or by digitalization and subsequent printing, and, also, on the basis of the separation of the different sheets of the cover.

The invention also refers to a process to manufacture this structure.

### BACKGROUND OF THE INVENTION

The double object, on the one hand the element of validation "on sight" of the authenticity of the identity document and on the other hand the distorting effects of the colors, in the attempts of fraudulent reproduction by means of a photocopying machine or by digitalization and subsequent color printing, of identity documents, is only complied with today by the so-called transparent covers with holograms printed or produced by corrosion systems and certain covers with aluminum base holograms. These covers with holograms are in principle very effective but they have the inconvenience of their vulnerability and their short duration due to defoliation or separation of their elements.

In connection with the prevention of reproduction by a photocopying machine or by digitalization and subsequent printing of identity documents, there is a wide offer of pigments to be added and mixed to the paper and plastic mass in the form of invisible ink which exposed to the specific light of photocopying machines and digitalization scanners, polymerize or crystallize with the fusion heat and final fixation of the photocopying machine or electrophotographic printer in question.

In this way the appearing of texts and anagrams (for example AVOID) that invalidate the attempt of a fraudulent copy of a reproduced document similar to the original document on the resulting copy is achieved. This concept has the inconvenience that if the original is precisely provided with said pigments or is of a similar nature and the copying machine eliminates the effects thereof the final object of protection is not obtained.

Most of the national identity cards that are presently in use with the present-day technology on the market include security printing of colored filigrees/guilloches and they are personalized with the holder's face image as well as other personal data of the same. The security printing, colored filigrees/grecques in these cases are done directly on the paper or plastic base nucleus by an offset printing process, and the personalization of each document is done by ink injection printing or by color electrophotographic printing systems with thermoplastic toner. In other words, the face image printed on said identity document that has been previously digitalized from an original can be obtained in color, in a continuous shade or in black and white. This nucleus of the identity document thus produced is physically protected with polyester/polyethylene thermolaminated covers.

Even in the event that covers with holograms are applied, the thermoadherence achieved uniformly between the nucleus and the cover does not suffice to prevent the identity document from being fraudulently defoliated by applying heat and the nucleus from being separated from the covers without them being irreversibly damaged and without the nucleus being damaged either. In this way it is possible to reuse the authentic and original covers with another nucleus of the original reproduced by a photocopying machine or by digitalization by a scanner or by high resolution printing (with an electrophotographic printer or colored ink injection) fraudulently handling another person's face image.

Up until now the inks that contain OVI (Optical Variable Ink) reflecting pigments have been used to print on the base nucleus of the identity document or on the protective sheet of the polyester-polyethylene cover, coats-of-arms and logos that give it a differentiating element. Certain reflecting pigment emulsions of a single color have been used to give the entire surface of a protective cover of identity documents a single changing color according to the viewing angle, in other words, to give the cover an Optical Variable Coating.

### DESCRIPTION OF THE INVENTION

The present invention, just as it is defined in the claims, basically consists of a security cover structure for identity documents, for example, identity cards, passports, credit cards, visas or checks that comprises:
a first transparent layer with a first surface and a second surface, the first surface being an outside surface of the structure;
a plurality of first areas distributed on said second surface of said first layer, and a first reflecting means deposited on said first areas;
a second transparent layer with a first surface and a second surface, said second layer overlying the second surface of the first layer and being fixed to the first layer;
a plurality of second areas distributed on the second surface of the second layer, and a second reflecting means deposited on said second areas;
the first areas and second areas being placed in such a way that they essentially do not overlap seen in a direction perpendicular to said first surface of said first layer;
the first layer comprising a transparent non-thermoplastic plastic sheet;
the second layer being of polyolefin.

The invention also comprises a process to obtain said structure, which includes the basic steps of depositing the first reflecting means on the first areas distributed on the second surface of said first layer; and applying the second layer in such a way that it overlies the second surface of the first layer, the application of the second layer including hot extrusion of polyolefin.

The transparent non-thermoplastic plastic sheet is preferably of polyester, but it may also be of polycarbonate, metacrylate, etc.

The structure may comprise one or several third transparent polyolefin layers, each one with a surface that has a plurality of third areas distributed on said surface, and with a third reflecting means deposited on said areas.

Given that the different areas are fixed by thermoadhesion, in principle there are no exact and clear barriers between said layers and it may be difficult to identify in detail the two opposite "surfaces" of two layers fixed to each other. However, we consider that one can speak of a stratified structure with different layers, though it is certain that the surfaces of the different layers remain somewhat indefinite by the thermoadhesion process (by means of extrusion and/or hot prelamination).

The reflecting means include color reflecting pigments that may be dispersed and emulsified in a binder.

The different layers may be applied by hot extrusion of polyolefin and/or hot prelamination of a fine layer or sheet of polyolefin on a previous layer. However, in principle, application of the second layer includes hot extrusion of polyolefin. Subsequent layers can be applied in the manner considered most appropriate on each occasion; for example, hot extrusion of polyolefin and prelamination may be alternated, in such a way that one layer is applied in the first manner, the following layer in the second manner and so on and so forth.

When a layer is applied to another layer by hot extrusion, the reflecting means is deposited after the layer has been applied. If the layer is applied to another layer by prelamination, it is also possible to apply the corresponding reflecting means after the layer has been applied. However, in the case of prelamination there is also the possibility of providing the polyolefin film or layer with deposits of reflecting means before it is applied to said other layer.

By means of the present invention, stratification of different layers of deposits and printings that contain reflecting pigments is achieved, said deposits and printings remaining established in pre-established areas that essentially do not overlap each other seen from a direction perpendicular to the first surface of the first layer. This makes the cover structure give the identity document a very high degree of security against digital reproduction (by a photocopying machine, by digitalization by a scanner and high resolution printing): This is due to the fact, inter alia, that the reflecting pigments, preferably of a different color in different areas and/or in different layers, due to their reflecting nature in different directions of the incident light, noticeably distort the colors of the resulting copy or reproduction with regard to the colors of the security printing (for example, colored filigrees/guilloches) of the bottom of the identity document which makes said copy useless. The distortion of the colors of the bottom is caused by the multiple reflection multiplying effect due to the incidence of the monochromatic light of the scanner/photocopying machine on the areas with reflecting pigments, camouflaging and distorting the colors of the bottom.

The set of layers with areas with reflecting pigment deposits also acts as a variable optical homogenous unit of maintained or sustained reflection-refraction, depending on the relation of thickness of each layer of polyolefin with the density/concentration/color of the reflecting pigments in the reflecting means deposited according to the area between said layers, as well as on the refraction-reflection coefficient of the unit comprised of each layer with its respective deposit according to areas of a reflecting means. The variable optical effect, known itself in the prior art, implies that the view of the bottom on which the cover structure is applied with the areas with a reflecting means, depends on the viewing angle.

Besides, the stratification that places areas with a binder deposit between polyolefin layers and that conveniently combines some prelaminated polyolefin sheet/film layers with other extruded polyolefin layers, makes the unit act asymmetrically in the fraudulent attempts of defoliation and separation of the layers by applying heat and a wide range of chemical reagents and solvents. In other words, the adherence between the different layers and the behavior with regard to heat and different reagents is different in different points of the thermoadhered surfaces depending on the presence or absence of the binder in which the reflecting pigments are dispersed and emulsified. This asymmetry causes, as a result of said fraudulent attempts of defoliation and separation, the parts of the cover to be irreversibly damaged in such a way that they cannot be used to reconstruct a forged or manipulated identity card.

By means of the suitable arrangement of the reflecting pigments, basically corresponding to basic colors (preferably red, yellow and blue as well as gold and silver, and optionally purple and green) alternately deposited on the different layers on areas of the same that essentially do not overlap, also allows the obtainment of a cover that permits validation "on sight", in other words, visual recognition of the authenticity of the identity document, based on the variable optical effect.

As to the second layer, it can be applied in two different ways:

A first possibility consists of applying the layer in a single step, hot extruding polyolefin on the first layer (and the corresponding first areas on which the first reflecting means has been deposited.) Then, the second reflecting means is deposited on the second areas of the free surface of the second layer.

The second possibility consists of applying the second layer in two steps, the first step comprising the application of a first part of the layer by hot extrusion of polyolefin. This step is followed by the step of application of a second part of the second layer, for example by prelamination of a fine polyolefin film or sheet, already optionally provided with the corresponding deposits of the second reflecting means.

The areas on which the reflecting means are deposited may represent a wide range of geometric shapes, straight or curved ones, for example strips placed in such a way that they essentially fit together and so that the areas corresponding to the different layers do not essentially overlap, seen in a direction perpendicular to the first surface of the first layer.

The areas may represent symbols, for example logos, legends, coats-of-arms, numbers, letters or a combination of them, in other words, the areas corresponding to a layer may represent a series of strips each one comprised of a series of reflecting letters and symbols (for example, "DNI * DNI * DNI * DNI"), done by suitable depositing or printing of the corresponding reflecting means. The areas corresponding to another layer may have the shape of continuous strips of one or several colors.

One or several of the reflecting means may be deposited by printing with OVI (Optical Variable Ink) containing colored reflecting pigments (and some type of binder or the like).

Other ways to deposit the reflecting means are by means of a electrophotographic printing system with toner that contains color reflecting pigments, and/or by hot injection or serigraphic printing.

The concentration of the reflecting pigments, of the OVI applied on the printing as well as the concentration in the mass of the binder used must be far away from saturation, so that the reflecting means is translucid seen perpendicularly and completely or at least essentially transparent inclining the viewing angle. The binder with dispersed and emulsified pigments is applied in such a way that the distribution of the orientation of the pigments is optimal to achieve the desired variable optical effect.

When emulsified and dispersed pigments in a binder are used, the binder may be comprised of pure gelatin, polyamide polymers, polyacrylates or by polyolefin polymers, or by a mixture of two or more of said substances.

Before depositing a polyolefin layer on the surface of a previous polyolefin or non-thermoplastic plastic layer (that may be a layer on which a reflecting means or a simple layer free of such a reflecting means has been deposited), an electric discharge known as the "crown effect" can be applied to said surface and then a fine polyolefin layer, or if applicable polypropylene which is also a polyolefin, is hot-extruded, or, alternately, a fine polyolefin film or sheet is hot prelaminated. The suitable reflecting means may be deposited per areas on this new layer formed in this way. Before this reflecting means is applied, another "crown effect" discharge may be applied. Application of a "crown effect" in this type of applications is known in the prior art and has the purpose of improving the adherence between the different layers and/or the reflecting means, on the basis inter alia of cleaning and "microcrater formation" of the surface in other words, obtainment of a rougher surface more apt to be used as a substrate for printing/extrusion/prelamination.

In this way, by means of successive addition of new layers and the corresponding areas with reflecting means, the stratified structure object of the present application is obtained. In principle, the more layers are prelaminated or extruded together the more secure the cover will be. However, the appearance of the entire cover must be harmoniously aesthetic. In practice, the optimum may be 2-4 layers with their areas with corresponding reflecting means.

The structure may be completed and terminated with a final polyolefin sealing layer, that is applied to a previous layer. Optionally, before applying the final polyolefin layer an ultraviolet filter layer may be applied to the previous polyolefin layer, this filter layer being covered by said final polyolefin layer. The ultraviolet light filter layer serves to protect the printing of personal data and/or of the colored filigrees/guilloches of the identity document (printing done on the nucleus of said document or on the cover itself) against the degenerating action of the ultraviolet rays of sunlight.

The cover made in this way can be directly personalized with the personal data, signature and face image of the holder of the identity document as well as with a redundant face image duplicated on any part of the identity document. This type of direct personalization on the cover is especially applicable to covers-labels that can be personalized. Color electrophotographic printing (commonly called laser color printing) is generally used on the market for this personalization or thermotransference-thermosublimation may also be used. Said personalization is also done by colored ink injection printers that use water-soluble inks or offset type ink which due to their nature cannot be applied directly to polyolefin surfaces since the inks do not instantly dry on the same.

To overcome this inconvenience, the present invention also considers the possibility of applying a binder (that may be reflecting pigment free) on specific areas of one of the polyolefin layers, preferably on the final polyolefin layer. The binder may be comprised of pure gelatin or of a mixture of gelatin and one or more substances chosen between polyamide polymers, polyacrylates and polyolefin polymers. In this case, the personalization data, for example, the signature, the face image and the personal data of the holder of the document can be printed on said specific areas. The printing may be done with a water-soluble ink or offset ink injection printer. For greater security, redundant duplication printing (for example, a reduced version) of the face image may be used. The ink of colored personalization printing dry instantly due to the absorbing power of the pure gelatin in those areas where deposited. Likewise, the personalization may be done with an electrophotographic system.

For greater security, filigrees/guilloches of colored lines may be printed on a polyolefin layer, for example, the final one.

The printing of personalization data may be done by means of the *diffusion reverse transfer* photographic system. This system consists of generating all personal data of the identity document on special colored negative photographic paper. Said personal data are transferred in a chemical developing bath superposing the negative paper that contains them with another piece paper on the one on which successive layers of pure gelatin have been deposited. The chemical developing bath and the slight pressure exerted between the two pieces of paper, negative and positive, results in the halides that comprise the images contained on the negative photographic paper being transfered directly by diffusion onto the gelatin of the photographic paper that acts as a photopositive receptor. In order to be able to apply this conventional system in the personalization of the cover object of the present invention, pure gelatin (pure collagen derivative) is deposited in several successive layers on specific predefined areas of the final polyolefin layer, for example by serigraphic printing or by means of hot deposit of said pure gelatin by hot injection by means of a mask in which hollow spaces and windows corresponding to the surfaces that are to be coated have been made.

### BRIEF DESCRIPTION OF THE FIGURES

An embodiment of the invention based on the following figures will be described hereinafter:
Figure 1 schematically illustrates three layers of the structure according to a preferred embodiment of the present invention.
Figure 2 schematically illustrates one part of the structure according to a preferred embodiment of the present invention, wherein the second layer comprised of two parts is schematically illustrated.
Figure 3 is a schematic perspective view of three components that may serve to form a structure according to the present invention.
Figure 4 schematically illustrates a structure according to a preferred embodiment of the present invention, wherein the areas with reflecting means represent curved geometric shapes.
Figure 5 schematically shows a structure according to a preferred embodiment of the present invention, wherein the areas with reflecting means represent letters and coats-of-arms.
Figure 6 schematically illustrates a way to carry out the application of one layer upon a previous layer.
Figure 7 schematically illustrates the hot prelamination of a fine polyolefin film or sheet on another previous layer.
Figure 8 schematically illustrates a way to carry out the depositing of a binder.
Figure 9 schematically shows a rotating tank in which a dispersion and emulsion of reflecting pigments is formed.
Figure 10 schematically illustrates a structure according to a preferred embodiment of the present invention, including a final layer of polyolefin on which a binder has been applied.
Figure 11 illustrates the binder deposits on the final polyolefin layer.
Figure 12 schematically illustrates a structure according to a preferred embodiment of the present invention,, provided with printed personalization data.
Figure 13 schematically illustrates several successive layers of gelatin on specific areas.

### DETAILED DESCRIPTION OF PREFERRED EMBODIMENTS OF THE INVENTION

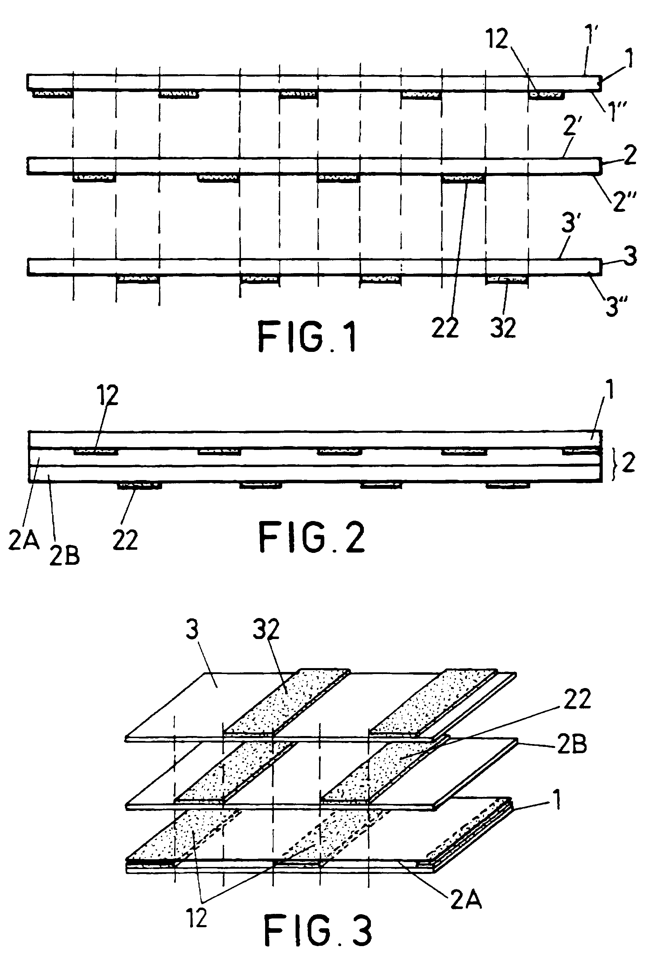

Figure 1 shows a first embodiment of the invention with a first transparent layer (1) with a first surface (1') and a second surface (1''), the first surface being an outside surface of the structure. A first reflecting means (12) has been deposited on a plurality of areas distributed on said second surface (1'') of said first layer (1). Likewise, the structure comprises a second layer (2) and a third layer (3), with their respective first (2', 3') and second (2'', 3'') surfaces. A second reflecting means (22) and a third reflecting means (32), respectively, have been deposited on certain areas of the second surface (2'') and third surface (3'') of these layers (2, 3). The first layer (1) is of a non-thermoplastic plastic (for example, polyester), while the second layer (2) and the third layer (3) are of polyolefin.

In figure 1, the different layers (1, 2, 3) are illustrated separately: however, the layers are really fixed to each other and there are no clear barriers between the layers, since the layers are attached by thermoadherence, by means of hot extrusion of polyolefin or by hot prelamination of a fine polyolefin film or sheet on a previous layer.

As to the second layer (2), it may be applied in two different ways:

A first possibility consists of applying the second layer (2) in a single step, hot extruding polyolefin on the first layer (1) and the corresponding first areas on which the first reflecting means (12) has been deposited Then, the second reflecting means (22) is deposited on the second areas of the second surface (2) of the second layer.

The second possibility is schematically shown in figure 2, that illustrates how the second layer (2) consists of a first part (2A) and a second part (2B). This possible manner of applying the second layer (2) consists of applying the second layer (2) in two steps, the first step comprising the application of a first part (2A)of the layer by means of hot extrusion of polyolefin. This step is followed by the step of applying a second part (2B) of the second layer, for example by means of prelamination of a fine polyolefin film or sheet, optionally already provided with the corresponding deposits of the second reflecting means (22). Of course, just as we have indicated above, once the different layers (1, 2) and parts (2A, 2B) have been applied, no barrier or clear line of separation between them can be identified.

Figure 3 is a schematic perspective view of three components that may serve to form a structure according to the present invention. In figure 3, one can see the first polyester layer (1) with the corresponding deposits of the first reflecting means (12). A first part (2A) of the second layer (2) has already been deposited on this layer by hot extrusion. Then, the second part (2B) of the second layer (2) is observed, this second part (2B) already being provided with deposits of a second reflecting means (22). This second part (2B) is applied on the first part (2A) by hot prelamination. The two parts (2A, 2B) are of polyolefin. A fine polyolefin film or sheet, that will comprise the third layer (3) and that is provided with the corresponding third reflecting means is also observed. This third layer is applied on the previous one by hot prelamination. In figure 3, the reflecting means (12, 22, 32) have been deposited in straight strips.

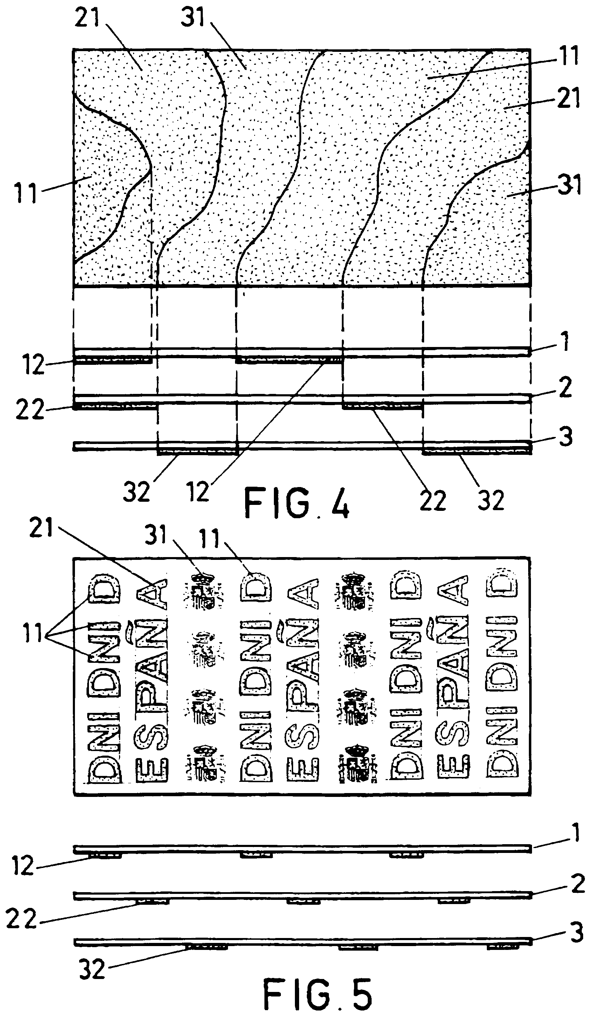

Figure 4 schematically shows a structure according to the present invention with three layers (1, 2, 3), in which the reflecting means (12, 22, 32) are deposited on first areas (11), second areas (21) and third areas (31) of the respective layers, these areas corresponding to curved geometric shapes.

Figure 5 schematically shows a structure according to the present invention with three layers (1, 2, 3), in which the reflecting means (12, 22, 32) are deposited on first areas (11), second areas (21) and third areas (31) of the respective layers. The first areas (11) and second areas (21) represent letters, while the third areas (31) represent coats-of-arms.

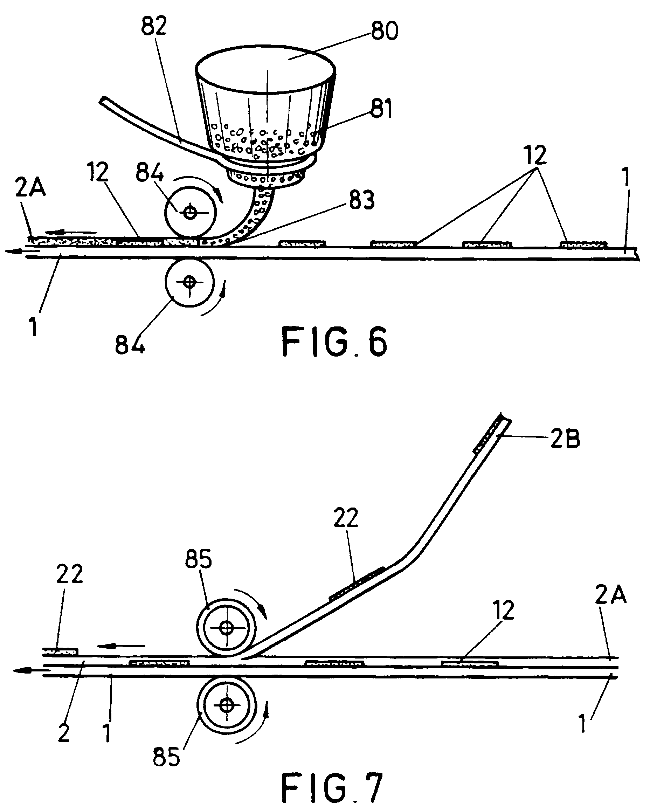

Figure 6 schematically illustrates the application of a layer (in this case, the first part (2A) of the second layer (2)) on a previous layer (in this case, the first layer (1) with the deposits of a first reflecting means (12)). A tank (80) with electric heating means (82) includes grains of polyolefin (81) that are melted and applied to the previous layer (1) through a hose (83) with an elongated hole. All of this passes through two pressurized rollers (84) heated internally.

Figure 7 schematically illustrates the hot prelamination of a fine polyethylene film or sheet (in this case, the second part (2B) of the second layer (2)) on a previous layer (in this case, on the first part (2A) of the second layer (2), this first part (2A) already being applied to the first polyester layer (1) with the corresponding deposits of the first reflecting means (12)). As one will see, the fine film or sheet that is applied is already provided with the corresponding deposits of a reflecting means (in this case, the second reflecting means (22)). In order to carry out the thermoadhesion, the fine film or sheet corresponding to the second part (2B) of the second layer (2) is superposed to the first part (2A) of said layer, and pressure and heat are applied by two hot rollers (85).

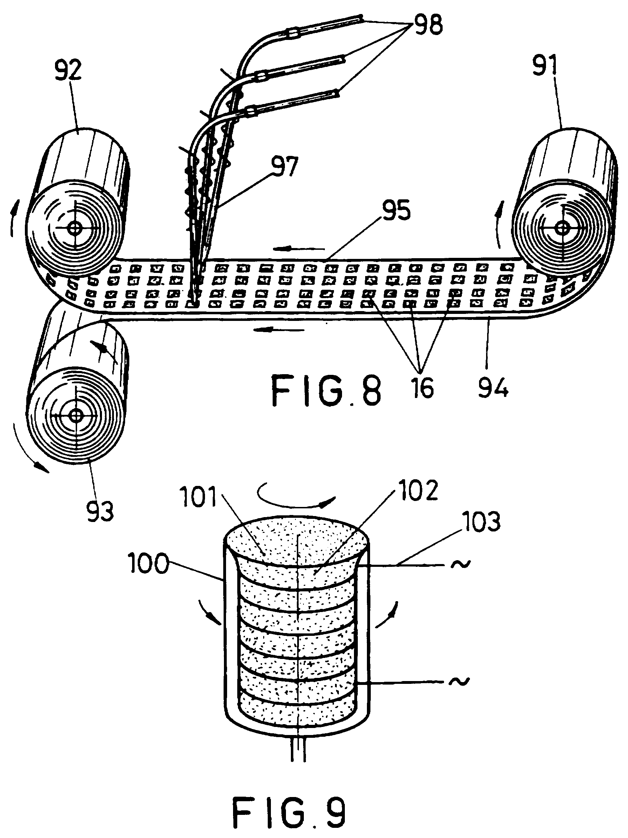

Figure 8 schematically illustrates a way to deposit a binder (which, if it is a matter of applying a reflecting means (12, 22, 32), includes reflecting pigments)) on a substrate (94) that, for example, may be a polyolefin film that subsequently serves for the second part (2B) of the second layer (2) or for a third layer (3) or, if applicable, for a final layer (5, 5'). The substrate is rolled up on a first spool (91), along with a mask sheet (95) provided with grooves (96) in the way of strips, for example. The substrate (94) - mask sheet (95) unit passes under some injectors (97). These injectors (97) receive the binder (that may contain reflecting pigments) through the corresponding ducts (98), and the apply the binder to the mask sheet (95). Subsequently, the substrate (94) on which the binder has been deposited in areas corresponding to the grooves (96) is separated from the mask sheet, the mask sheet rolling up on a second spool (92) and the substrate rolling up on a third spool (93).

Figure 9 schematically shows the rotating tank (100) in which the dispersion and emulsion of colored reflecting pigments in a binder (102) is formed. The binder (102) may be, for example, gelatin. The reflecting pigments (101) and the binder (102) are mixed and heat is applied by the suitable electric heating means (103) to ensure the adequate consistency of the binder. In order to obtain the desired distribution of the reflecting pigments (101) in the binder (102), the tank (100) rotates at a suitable speed.

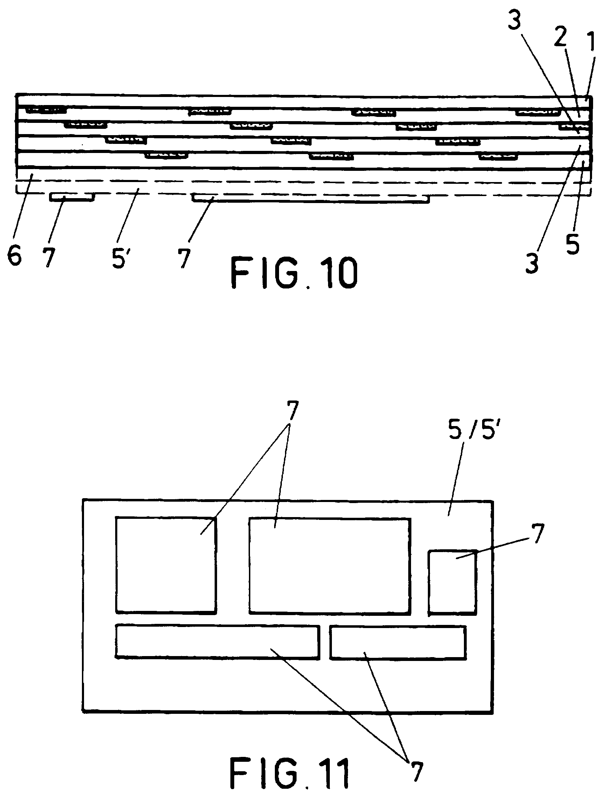

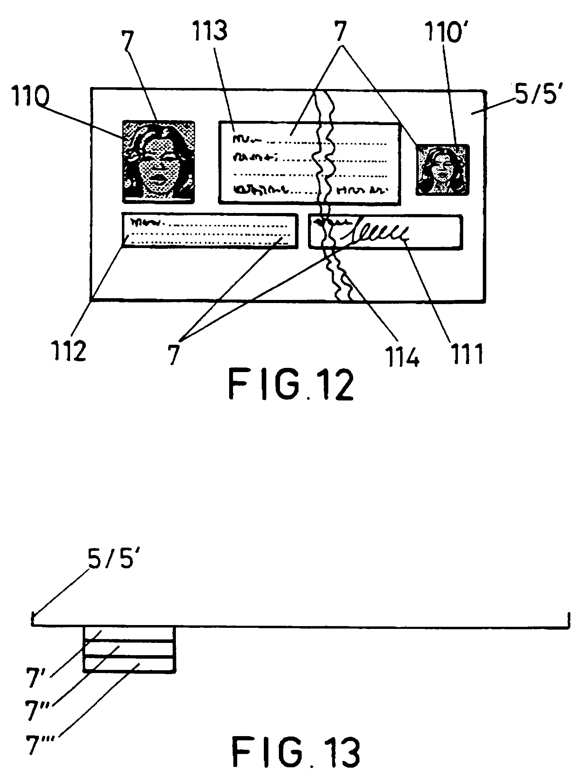

Figure 10 schematically illustrates a structure according to a preferred embodiment of the present invention, that comprises two third layers (3). A polyolefin layer (5) that may be the last polyolefin layer (5) is applied to the final third layer (3) with its corresponding reflecting means (32). However, an ultraviolet light filter layer (6), that serves to protect the printings made on subsequent layers of the cover and/or on the nucleus of the identity document, is optionally applied to it. If a filter layer (6) is applied, this layer is covered by a final polyolefin layer (5'). A binder (7) may be applied on the final polyolefin layer (5, 5') on specific areas, as one can see in figure 11. The binder serves as a base for subsequent printing, for example, of personalization data. Figure 12 illustrates the final polyolefin layer (5, 5') with the areas with binder (7), on which the face image (110), signature (111), address (112) as well as other personal data (113) of the holder have been printed. For greater security, a reduced redundant duplicate (110') of the face image has also been printed. Printing may be done with a water-soluble ink or offset ink injection printer.

For greater security, filigrees/guilloches of colored lines (114) may be printed on one layer, for example, on the final polyolefin layer (5, 5').

Printing of the personalization data may be done by the *diffusion reverse transfer* system. In such a case, as it is schematically illustrated in figure 13, pure gelatin (pure collagen derivative) is deposited on several successive layers (7', 7'', 7''') on specific predefined areas of the final polyolefin layer (5, 5').

The polyester sheet of the first layer (1) may have a thickness between 30 and 100 micra.

The areas or strips of reflecting means deposited on the layers may have a width between 5 and 10 mm and a thickness of 5 to 15 micra.

The extruded polyolefin layers may have a thickness of 6 to 25 micra, and the fine polyolefin film or sheet used for prelamination may have a thickness of 30 to 50 micra.

## Claims

1. Security cover structure for identity documents, for example, identity cards, passports, credit cards, visas or checks that comprises
a first transparent layer (1) with a first surface (1') and a second surface (1''), the first surface being an outside surface of the structure;
a plurality of first areas (11) distributed on said second surface (1'') of said first layer (1), and a first reflecting means (12) deposited on said first areas;
a second transparent layer (2) with a first surface (2') and a second surface (2''), said second layer (2) overlying the second surface (1'') of the first layer (1) and being attached to the first layer (1);
a plurality of second areas (21) distributed on the second surface (2'') of the second layer (2), and a second reflecting means (22) deposited on said second areas (21),
the first areas (11) and the second areas (21) being placed in such a way that they essentially do not overlap seen in a direction perpendicular to said first surface (1') of said first layer (1);
the first layer (1) comprising a transparent non-thermoplastic plastic sheet;
the second layer (2) being of polyolefin.

2. Structure according to claim 1, wherein overlying the second surface (2'') of the second layer (2) there are m third transparent polyolefin layers (3), each one with a surface (3'') that has a plurality of third areas (31) distributed on said surface (3'') and a third reflecting medium (32) deposited on said areas, the first areas (11), the second areas (21) and the third areas (31) being placed in such a way that they essentially do not overlap seen in a direction perpendicular to said first surface (1') of said first layer (1), m being an integer > = 1.

3. Structure according to any of the above claims, wherein the second layer (2) is a hot-extruded polyolefin layer.

4. Structure according to any of the claims 2-3 wherein at least one of the third layers (3) is a hot-extruded polyolefin layer.

5. Structure according to any of the claims 2-4, wherein at least one of the third layers (3) is a hot prelaminated polyolefin sheet.

6. Structure according to any of the above claims, wherein the reflecting means (12, 22, 32) include coloured reflecting pigments.

7. Structure according to the above claim, wherein the reflecting pigments are dispersed and emulsified in a binder.

8. Structure according to claim 6, wherein at least one of the reflecting means (12, 22, 32) is deposited by OVI (Optical Variable Ink) ink printing the ink containing colored reflecting pigments.

9. Structure according to any of the claims 6-8, wherein at least one of the reflecting means (12, 22, 32) is deposited by electro-photographic printing system with toner that contains coloured reflecting pigments.

10. Structure according to any of the claims 6-9, wherein at least one of the reflecting means (12, 22, 32) is deposited by hot injection means or serigraphic printing.

11. Structure according to claim 7, wherein the binder is comprised of pure gelatin, by polyamide polymers, by polyacrylates or polyolefin polymers, or by a mixture of two or more of said substances.

12. Structure according to claim 6, wherein at least one of the reflecting means (12, 22, 32) includes reflecting pigments of a first color and another one of the reflecting means (12, 22, 32) includes reflecting pigments of a second colour, the first colour and the second colour being different colours.

13. Structure according to any of the above claims, wherein the areas (11, 21, 31) include straight or curved geometric shapes, for example, strips, placed in such a way that they essentially fit in with each other and that they essentially do not overlap, seen in a direction perpendicular to said first surface (1') of said first layer (1).

14. Structure according to any of the above claims, wherein at least one of the areas (11, 21, 31) represent symbols, for example, logos, codes, coats-of-arms, figures, letters or a combination thereof.

15. Structure according to any of the above claims, that includes a final layer (5, 5') of polyolefin, placed in such a way that the second layer (2) is placed between said final layer (5, 5') and the first layer (1).

16. Structure according to the above claim, wherein the final polyolefin layer (5') overlies an ultraviolet light filter layer (6) that is fixed to another polyolefin layer (5).

17. Structure according to any of the claims 15 and 16, wherein there are specific areas on the final polyolefin layer (5, 5'), a binder (7) layer being deposited on each one of said specific areas.

18. Structure according to claim 17, wherein the binder (7) is comprised of pure gelatin or by a mixture of gelatin and one or several substances chosen from among polyamide polymers, polyacrylates and polyolefin polymers.

19. Structure according to any of the claims 17-18, characterized in that personalization data, for example, the signature (111), face image (110) and personal data (112, 113) are printed on said specific areas.

20. Structure according to any of the claims 15-19, which comprises filigrees/guilloches (114) of coloured lines printed on the final layer (5, 5') of polyolefin.

21. Structure according to any of the claims 17-20, wherein a pure gelatin emulsion in overlying layers (7', 7'', 7''') is deposited on the specific areas, thus converting each one of said specific areas into a photopositive receptor of the conventional diffusion reverse transfer photographic system.

22. Process for obtaining a security cover structure for identity documents, for example identity cards, passports, credit cards, visas or checks, according to any of the above claims, that comprises a first transparent layer (1) with a first surface (1') and a second surface (1''), the first surface being an outside surface of the structure, a plurality of first areas (11) distributed on said second surface (1'') of said first layer (1) and a first reflecting means (12) deposited on said first areas, a second transparent layer (2) with a first surface (2') and a second surface (2''), said second layer (2) overlying the second surface (1'') of the first layer (1) and being attached to the first layer (1), a plurality of second areas (21) distributed on the second surface (2'') of the second layer (2), and a second reflecting means (22) deposited on said second areas (21), the first areas (11) and the second areas (21) being placed in such a way that they essentially do not overlap seen in a direction perpendicular to said first surface (1') of said first layer (1), the first layer (1) comprising a transparent non-thermoplastic plastic sheet and the second layer (2) being of polyolefin,
characterized in that the process includes the steps of
depositing a first reflecting means (12) on the first areas (11) distributed on the second surface (1'') of said first layer (1);
applying the second layer (2) in such a way that it overlies the second surface (1'') of the first layer, the application of the second layer (2) including hot extrusion of polyolefin.

23. Process according to claim 22, which also includes the step of depositing a second reflecting means (22) on the second areas (21) distributed on the second surface (2'') of the second layer (2).

24. Process according to claim 22, wherein the step of applying the second layer includes application on the second surface (1'') of the first layer (1) of a polyolefin layer (2A) by hot extrusion of polyolefin, and the subsequent application on said layer (2A) of a polyolefin sheet (2B) by hot prelamination, this polyolefin sheet (2B) including the second areas (21) with the second reflecting means (22).

25. Process according to any of the claims 22-24, that also comprises the step of applying on the second layer m third transparent polyolefin layers (3), each one with a surface (3'') that has a plurality of third areas (31) distributed on said surface (3''), and with a third reflecting means (32) deposited on said areas, m being an integer > = 1.

26. Process according to claim 25, wherein at least one of the third layers (3) is applied by hot extrusion of polyolefin on a previous layer (2, 3), applying the corresponding third reflecting means (32) after having applied said third layer (3).

27. Process according to claim 25, wherein at least one of the third layers (3) is applied by hot prelamination of a polyolefin sheet on a previous layer (2, 3).

28. Process according to claim 25, wherein at least one of the third layers (3) is applied by hot prelamination of a polyolefin sheet on a previous layer, depositing the third reflecting means (32) on said polyolefin sheet before it is applied to said previous layer.

29. Process according to any of the claims 25-28, wherein m > 1 and one part of the third layers (3) is applied by hot extrusion of polyolefin, and the remaining part of the third layers (3) is applied by hot prelamination.

30. Process according to any of the claims 22-29, wherein the reflecting means (12, 22, 32) are applied by coloured reflecting pigment deposition.

31. Process according to claim 30, wherein reflecting pigments that are emulsified and dispersed in a binder are used.

32. Process according to any of the claims 30 and 31, wherein at least one of the reflecting means (12, 22, 32) is deposited by OVI (Optical Variable Ink) ink printing the ink containing coloured reflecting pigments.

33. Process according to any of the claims 30.32, wherein at least one of the reflecting means (12, 22, 32) is deposited by an electro-photographic printing system with toner that contains coloured reflecting pigments.

34. Process according to any of the claims 30-33, wherein at least one of the reflecting means (12, 22, 32) is deposited by hot injection or by serigraphic printing.

35. Process according to claim 31, wherein the binder is comprised of pure gelatin, by polyamide polymers, by polyacrylates or by polyolefin polymers, or by a mixture of two or more of said substances.

36. Process according to any of the claims 22-35, wherein to deposit at least one of the reflecting means (12, 22, 32), reflecting pigments of a first colour are used and to deposit another one of the reflecting means (12, 22, 32) reflecting pigments of a second colour are used, the first colour and the second colour being different colours.

37. Process according to any of the claims 22-37, wherein the reflecting means (12, 22, 32) are deposited on areas (11, 21, 31) that include straight or curved way that they essentially fit in with each other and that essentially do not overlap, seen in a direction perpendicular to said first surface (1') of said first layer (1).

38. Process according to any of the claims 22-37, wherein at least one of the reflecting means (12, 22, 32) is deposited on an area (11, 21, 31) that represents symbols, for example, logos, codes, coats-of-arms, figures letters or a combination of them.

39. Process according to any of the claims 22-38, wherein a final polyolefin layer (5, 5') is applied on a previous layer (2, 3), in such a way that the second layer (2) remains located between said final layer (5, 5') and the first layer (1).

40. Process according to claim 39, wherein an ultraviolet light filter layer (6) is applied on another polyolefin layer (5) applying the final polyolefin layer (5') on the filter layer (6).

41. Process according to any of the claims 39 and 40, wherein a binder layer (7) is deposited on specific areas of said final polyolefin layer (5, 5').

42. Process according to claim 41, wherein said binder (7) is comprised of pure gelatin or a mixture of gelatin and one or several substances chosen from among polyamide polymers, polyacrylates and polyolefin polymers.

43. Process according to any of the claims 41 and 42, wherein personalization data for example, the signature (11), face image (110) and personal data (112, 113) are printed on said specific areas.

44. Process according to any of the claims 39-43, wherein filigrees/guilloches (114) of coloured lines are printed on the final polyolefin layer (5, 5').

45. Process according to any of the claims 41-44, wherein a pure gelatin emulsion is deposited on the specific areas in overlying layers (7', 7'', 7'''), thus converting each one of said specific areas into photopositive receptor of the conventional diffusion reverse transfer photographic system.

46. Process according to claim 45, that includes a step of personalization of the cover by means of printing the personal data (112, 113), the signature (111), the face image (110) and a duplicate redundant face image (110') by means of said diffusion reverse transfer.
